# EUROPEAN PATENT SPECIFICATION

(11) **EP 1 903 523 B1**
(45) Date of publication and mention of the grant of the patent: **31.12.2008**
(21) Application number: 07394019.9
(22) Date of filing: 20.09.2007
(51) Int. Cl.: G08B 17/00, G08B 25/00

(54) **Alarm systems**
Alarmsysteme
Systèmes d'alarme

(30) Priority: 21.09.2006 IE 20060694
(43) Date of publication of application: 26.03.2008
(73) Proprietor: E.I. Technology Limited, Shannon, County Clare (IE)
(72) Inventor: Byrne, Michael, Limerick (IE); Flynn, Fergus, County Clare (IE); Guinee, Michael, Limerick (IE); Duignan, James, Limerick (IE); Doyle, Ronan, County Clare (IE)
(74) Representative: Weldon, Michael James

(56) References cited:
- EP-A- 0 811 959
- EP-A- 1 039 689
- EP-A- 1 469 437
- EP-A- 1 501 060
- US-A- 4 855 713

## Description

### Introduction

The invention relates to alarm systems, and particularly to wireless communication between devices of an alarm system.

Fire alarm systems for buildings typically consist of a number of smoke and heat alarm devices, manual call points, remote test and hush switches, locator switches and for larger buildings, control panels. All of the components must communicate with each other and the simplest way to do this is with wireless RF communication. Alarm devices which communicate with each other wirelessly are described in US7057517, US6078269, US5587705, EP1501060, and US2001/0038336.

However the RF range of these devices may not be sufficient in some circumstances due to walls, ceilings, wiring, pipework, and metal backed plaster board attenuating the signals. RF signals can also be severely reduced by "fading", caused by two signals of roughly equal strength (for example the direct signal and one reflected from a metal surface) causing destructive interference by being an integral number of half wavelengths apart as they arrive at the receiving antenna.

One approach to addressing this problem is to use repeaters and a central computer server, as described in WO00/55825. However this is a costly solution as it requires additional devices.

Another approach is to have different categories of units, such as masters and slaves. However defining these and setting them up is complex and may require a separate computer.

The invention is directed towards providing an alarm system with improved wireless communication between alarm devices.

### Summary of the Invention

According to the invention, there is provides an alarm device comprising an environmental condition sensor, a wireless receiver, a wireless transmitter, and a controller, wherein the controller comprises means for directing repeating of received messages according to conditions.

In one embodiment, the controller comprises means for inserting a repetition level indicator in a repeated message, for reading repetition level indicators in received messages, and for deciding on repeating said received messages according to the repetition level indicators.

In one embodiment, the controller does not repeat a message which has already been repeated a maximum threshold number of times, as indicated by the repetition level indicator.

In one embodiment, the maximum threshold is three.

In one embodiment, the controller comprises means for timing-out and re-setting cycles of monitoring repetition levels.

In one embodiment, the controller comprises means for cancelling messages which are held without being repeated for a pre-set period of time.

In one embodiment, the controller comprises means for deferring transmission of a repeated message if another device is currently transmitting.

In one embodiment, the controller defers transmission for a period of time chosen according to an identifier of the device and identifiers of the other devices.

In one embodiment, the controller defers by a multiple of a unit of time, the multiple being determined according to order of a serial number of its identifier in the full group of serial numbers of all of the identifiers of the alarm devices.

In another embodiment, the controller comprises means for learning said serial numbers of the other devices during a house coding phase at installation.

In one embodiment, the controller comprises means for performing house coding by:
in a first phase transmitting and re-transmitting its coding message,
in a second phase repeating house codes it has learned from other devices.

In one embodiment, the controller comprises means for transmitting all learned house codes in a manner whereby the broadcast can be received by a host or test system.

In one embodiment, the controller comprises means for transmitting at a higher signal strength during house coding than for other types of signals.

In one embodiment, the controller comprises means for broadcasting an indication of its transmitter's signal strength.

In one embodiment, the controller comprises means for being configured as a repeater device with repeater functionality enabled.

In one embodiment, the controller comprises means for configuring itself in response to a configuration command signal received by a host.

In one embodiment, the sensor is a smoke or heat sensor.

In another aspect, the invention provides an alarm system comprising a plurality of alarm devices as defined above

### Detailed Description of the Invention

The invention will be more clearly understood from the following description of some embodiments thereof, given by way of example only with reference to the accompanying drawings in which:-
Fig. 1 is a block diagram of a smoke alarm device of the invention;
Fig. 2 is a diagrammatic representation of an alarm system having fifteen alarm devices, one of which is configured as a repeater; and
Fig. 3 is a diagrammatic representation of an alarm system having fifteen alarm devices, ten of which are configured as repeaters.

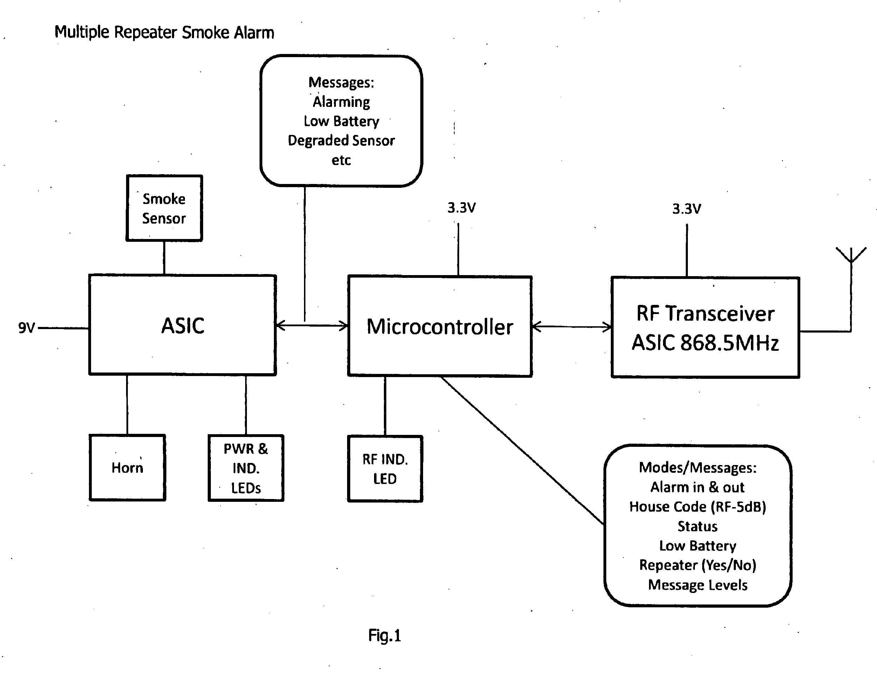

Referring to Fig. 1 the internal architecture of a smoke alarm device comprises a smoke sensor, an application specific integrated circuit (ASIC), a horn, indicator LEDs, a microcontroller, and an RF transceiver. The invention resides in the manner in which the microcontroller is programmed to direct wireless communication by the RF transceiver.

The RF transceiver operates in the 868.00 to 868.600 MHz band. This is a 1 % duty cycle band with maximum recommended power output of 25 mW. This allows a maximum ON time of 3.6 seconds and a minimum OFF time of 1.8 seconds (as per ERC Recommendation 70-03, Feb 2002). Using this band helps ensure messages can be readily sent without undue delay.

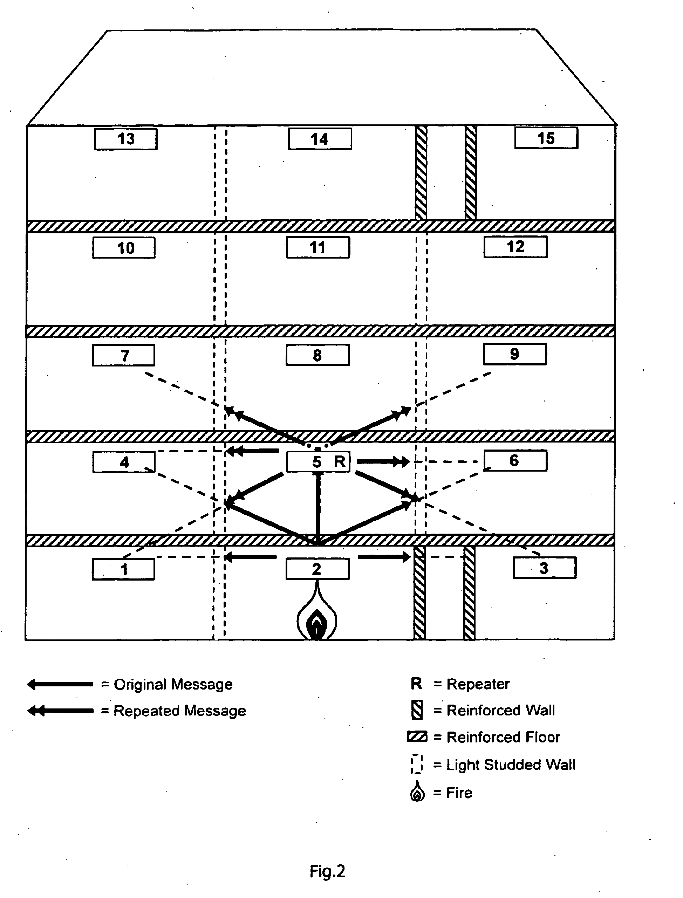

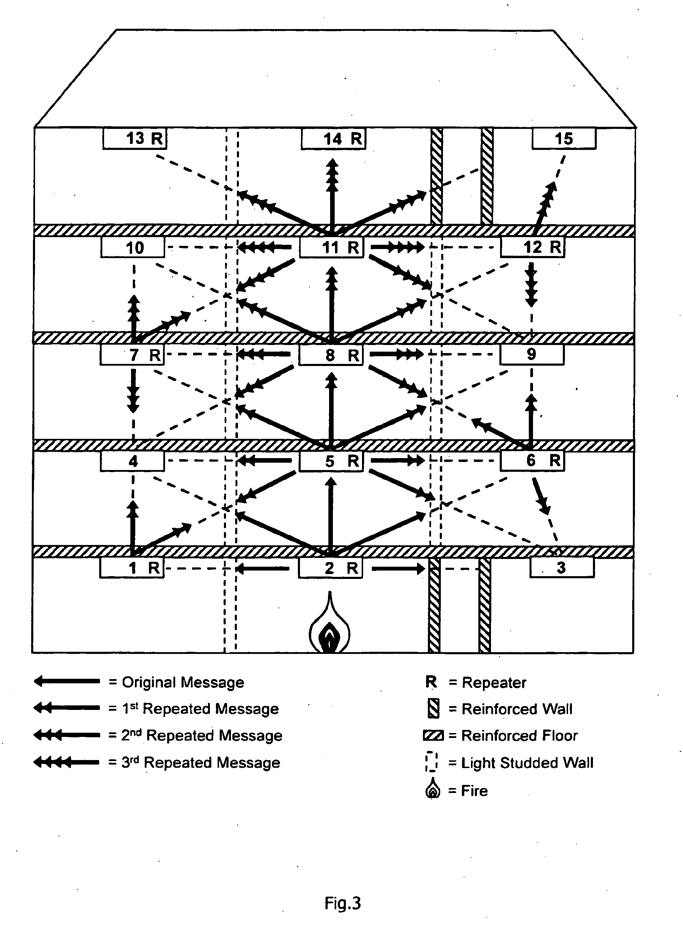

One of fifteen alarm devices shown in Fig. 2 has been configured to operate also as a repeater, whereas ten of the devices in the system of Fig. 3 are so configured.

### Repeater Protocol

The microcontrollers of the alarm devices are programmed as follows.

All messages have a repeat "level" indicator in the code to indicate if it is an original message or a repeated message. With repeated messages it shows how often the message has been repeated. The levels are as follows:
Level 0 - Original message (actually designated "FO")
Level 1 - Message repeated once (actually designated "EO")
Level 2 - Message repeated twice (actually designated "DO")
Level 3 - Message repeated 3 times (actually designated "CO")

Each alarm device includes its unique serial number in an alarm message, in addition to the alarm condition indicator, and the repeat level. An example of an alarm signal is as follows F5 C0 E0 C7 05070443.

When a repeater alarm device receives an alarm message it executes logic to decide on whether to repeat it. It repeats the message:
- IF the repeat level is 2 or less (so that it will not be repeated more than three times), AND
- IF it has not already repeated the same message at this or a lower level (as determined by reference to the originating alarm device serial number), within the previous 40 seconds.

Each repeater only repeats after expiry of a pre-set stand-off period such as 40 ms or 80 ms, 120 ms etc. This avoids clashing. The repeater alarm device first checks that the RF band is clear. If some other unit is transmitting, it waits unit this has finished. Then, depending on its own serial number, in relation to all the other serial numbers it has learned, it waits a fixed time. For example, if its serial number is the lowest it waits 40 ms, if it the second lowest it waits 80 ms, if it is the third lowest it waits 120 ms and so on. It then checks that the channel is clear and transmits if it is - otherwise it waits and goes through the above procedure again. This overcomes the problem of say 5 devices simultaneously receiving an alarm message and all simultaneously sending - this results in the messages being garbled as they are all "on top of each other". A prior approach to overcoming this problem has been to introduce a random standoff period - however this can still lead to a high probably of clashing unless the periods are totally "random" and the units wait an inconveniently long time.

In more detail, when a repeater alarm device ("unit") receives a message (for example at level 1 from Unit 11) it repeats it and sends it on as a level 2 message. This unit will now not repeat messages from Unit 11 unless they are at the same level (in the example, level 1) or at a lower level (in the example level 0). It will not repeat a message from the same unit at level 2. This ensures that messages propagate outwards from the original unit, as illustrated in Figs. 2 and 3. After 40 seconds the unit will repeat any message from any unit once it is not at level 3 i.e. it returns to normal (40 seconds allows the vast majority of messages and repeated messages to be sent).

If a unit is waiting to send a message, due to others using the RF channel, then it will only hold this message for 60 seconds and then cancel it. This ensures that messages will not be stored for long periods, due for instance to a constant RF interference source in the channel and then repeated once the RF interference source switches off.

If a unit is waiting to send a message (for instance an "alarm" message) and it receives another message (for example an "alarm cancel" message) the second message overwrites the first message.

The units are house coded as follows:
- For the first 5 minutes each unit just sends out its house code serial number and stores those it hears. The signal is 50ms long, consisting of the 10ms message, repeated 5 times, sent every 5 seconds. This means that each message is sent 60 times. This duty cycle of 50 ms every 5 seconds ensure that each unit does not exceed the 1 % duty cycle for the band being used.
- For the remaining 10 minutes, each repeater just keeps repeating in sequence those units it has learned, along with its own house code and any new house code it has received during this 10 minutes and added to its stack. During this mode they stay within the 1% duty requirement (50ms every 5 s).

Each repeater alarm device will be able to send 10 X 60/5 = 120 messages during this 10 minutes. So even in the worst case scenario where most of the house codes have to be sent through the three levels of repeat then most units will have at least two if not more chances to receive and store all of the house codes. If all of the house codes have not been learned, for example if there was a delay in putting them into house code mode, so that all the units were not on at the same time for close to the 15 minutes, then they can be put into house code mode again, possibly in a different sequence.

The normal repeater mode will not work with the house code process, as with 20 units there will be 20 house codes broadcast every 5 seconds and if these are repeated by 10 repeaters this means 200 messages should be broadcast every 5 seconds. This leads to much signal clashing, to some house codes not being repeated, and possibly the 1% duty cycle requirement not being fully met. This results in all the units not being house coded.

While in house-coding mode each unit flashes an LED to indicate the number of house codes it has learned. This greatly facilitates the checking, as the installer knows that all 20 (or whatever number of units are in the system) are in communication.

In the house-coding mode the signal strengths are about 5dB higher as compared with normal standby. This gives a further margin as it ensures that units are not close to the edge of their range.

If for some reason all units do not house code to each other, there is a potential problem that one does not know which ones are missing. This problem is addressed by the repeater alarm devices broadcasting all the house codes they have learned. These can be received by test equipment and displayed. The test equipment could be relatively low-cost, for example a PC or PDA with an RF decoder connected to the USB.

During the transmissions of house codes, the units can also broadcast the strength of the signal received from each unit. This helps ensure the reliability of the system as if some signals are too weak action such as addition of repeaters can be taken.

The units can respond to various interrogation commands, such as to send their status message, or the units whose house codes they have learned with the associated signal strengths, so that panels or other units can check and/or modify the system. This would allow units to be made into repeaters (or to cancel the repeater mode) remotely. This could be done automatically by a separate controller after it had analysed all of the signal strengths in a given set-up and decided the best location of repeaters and/or additional units.

### Installation

In a system having up to 10 units, they should all be configured as repeaters. An alarm device is configured as a repeater by simply holding down the test button and then the house code button. If 10 repeaters all receive the same alarm from a particular unit, then all the repeated messages will be sent in less than 40 seconds (i.e. 10 X 3.5 seconds plus the relatively short standoff delays.

With up to 20 units, 10 can be configured as repeaters, and these are distributed throughout the building. Some repeater units should be at peripheral locations, and units in long spurs away from the rest of the units should be linked through repeaters

All of the units are then put in house code mode. For the first 5 minutes, the units will just learn the house codes of the units within direct range. For the remaining 10 minutes, each repeater will repeat in sequence all the unit serial numbers it has learned, along with the additional serial numbers it receives during this period.

In this way, serial numbers are transmitted from one repeater level to the next repeater level so that all units learn all the house codes of the units within range of any of the repeater units.

If it has taken too long to get all the units into house code, so there was insufficient time to learn all the house codes, the installer simply puts them all back into house code mode, in a different sequence this time.

With up to 24 units, check that all units have learned all the system's unit house codes, by counting the number of LED flashes - this should equal the number of units. The 10^{th} and 20^{th} flashes are longer to make the counting easier.

The next step is to button test the most peripheral unit and check all other alarms, then button test all the units in sequence and check that this peripheral unit responds to all the units in turn. Repeat until all units have been checked fully.

In the house-coding mode the signal strengths are 5dB higher than the other maximum signal strength (e.g. alarm signals). This is to help ensure the system does not include units with marginal signal strength i.e. to give "guard band".

Messages that are received by repeaters, but are not transmitted for some reason (e.g. RF interference) will be cancelled after 60 seconds. This makes doubly sure, that after say an alarm event, all units will be back to normal standby within 2 minutes even if the alarm cancel message was not received by some units.

### Examples

The original alarm message is at level 0.
- The first repeater level sends it on at level 1.
- The second level repeater will repeat this message and send it on at level 2.
- The third level repeater will repeat this message further and send it on at level 3.

A repeater will only repeat further messages from a particular unit, if the level is the same as the first message (or lower). For example, if it received the messages at level 1 from Unit 7, it will repeat messages at level 1 or 0 from Unit 7, but not messages at level 2. This ensures that the messages propagate outwards from the unit initiating the alarm (or other RF message). After 40 seconds this is cancelled and it goes back to standby ready to repeat any messages.

Fig. 2 shows a 5-storey house with reinforced floors and some reinforced walls. For illustration purposes it is assumed that an RF signal will only penetrate one reinforced ceiling or reinforced wall. This shows that the alarm will just be given on 3 floors assuming Unit 2 detected fire. Smoke Alarms numbered 1, 4 and 6 will probably receive the RadioLink alarm message twice directly from Smoke Alarm 2 and then the repeated message through from Smoke Alarm 5.

Fig. 3 shows how multiple repeaters make a huge improvement. When Unit 2 detects the fire it sends a signal directly to Units 1, 4, 5 and 6. Unit 5, a repeater, now repeats this alarm signal at the first level (illustrated by the two prongs on the arrows). This is received by Unit 8 which relays it at the second level to Unit 11, which then repeats it at the third level. In this way the signal from Unit 2 can penetrate the 4 reinforced ceilings to reach the smoke alarms on the top storey.

Fig. 3 shows that most smoke alarms receive an RF message at least twice and that some receive it three or more times. For example Unit 7 receives the message twice, the repeated message from Unit 5 and also the further repeated message from Unit 8. Unit 8 receives the message three times - from Unit 5, Unit 6 and Unit 7. All repeated messages are not shown.

Unit 15 receives an RF message once as it is surrounded on one side with two impenetrable walls - the message gets to it from the Unit 12, on the ceiling below it, which is a repeater.

When a unit on the ground floor detects fire the repeaters trigger the alarms on a phased basis, with the ones on the top floor responding typically in less than 20 seconds. Similarly when a unit on the ground floor is button tested the repeaters trigger the alarms on a phased basis.

It will be appreciated that the invention achieves excellent reliability in operation systems of alarm devices, even where there are many barriers to RF signals and/or considerable distances between devices.

The invention is not limited to the embodiments described but may be varied in construction and detail.

## Claims

1. An alarm device comprising an environmental condition sensor, a wireless receiver, a wireless transmitter, and a controller, wherein the controller comprises means for inserting a repetition level indicator in a repeated message, for reading repetition level indicators in received messages, and for deciding on repeating said received messages according to the repetition level indicators;
wherein the controller does not repeat a message which has already been repeated a maximum threshold number of times, as indicated by the repetition level indicator; and wherein the maximum threshold is three.

2. An alarm device as claimed in claim 1, wherein the controller comprises means for timing-out and re-setting cycles of monitoring repetition levels.

3. An alarm device as claimed in claims 1 or 2, wherein the controller comprises means for cancelling messages which are held without being repeated for a pre-set period of time.

4. An alarm device as claimed in any preceding claim, wherein the controller comprises means for deferring transmission of a repeated message if another device is currently transmitting.

5. An alarm device as claimed in claim 4, wherein the controller defers transmission for a period of time chosen according to an identifier of the device and identifiers of the other devices.

6. An alarm device as claimed in claim 5, wherein the controller defers by a multiple of a unit of time, the multiple being determined according to order of a serial number of its identifier in the full group of serial numbers of all of the identifiers of the alarm devices.

7. An alarm device as claimed in claim 6, wherein the controller comprises means for learning said serial numbers of the other devices during a house coding phase at installation.

8. An alarm device as claimed in any preceding claim, wherein the controller comprises means for performing house coding by:
in a first phase transmitting and re-transmitting its coding message,
in a second phase repeating house codes it has learned from other devices.

9. An alarm device as claimed in claim 8, wherein the controller comprises means for transmitting all learned house codes in a manner whereby the broadcast can be received by a host or test system.

10. An alarm device as claimed in claims 8 or 9, wherein the controller comprises means for transmitting at a higher signal strength during house coding than for other types of signals.

11. An alarm device as claimed in any preceding claim, wherein the controller comprises means for broadcasting an indication of its transmitter's signal strength.

12. An alarm device as claimed in any preceding claim, wherein the controller comprises means for being configured as a repeater device with repeater functionality enabled.

13. An alarm device as claimed in claim 12, wherein the controller comprises means for configuring itself in response to a configuration command signal received by a host.

14. An alarm device as claimed in any preceding claim, wherein the sensor is a smoke or heat sensor.

15. An alarm system comprising a plurality of alarm devices as claimed in any preceding claim.

## Patentansprüche

1. Alarmgerät, das Folgendes umfassst: einen Umgebungsbedingungssensor, einen Funkempfänger, einen Funksender und eine Steuerung, wobei die Steuerung Mittel zum Einfügen eines Wiederholungsanzeigers in eine wiederholte Nachricht, zum Lesen von Wiederholungsanzeigern in empfangenen Nachrichten und zum Fällen einer Entscheidung über das Wiederholen der genannten empfangenen Nachrichten je nach den Wiederholungsanzeigern umfasst;
wobei die Steuerung eine Nachricht, die bereits eine Höchstzahl von Malen gemäß Anzeige durch den Wiederholungsanzeiger wiederholt wurde, nicht mehr wiederholt; wobei die Höchstzahl drei ist.

2. Alarmgerät nach Anspruch 1, wobei die Steuerung Mittel zum Zeitabschalten und Zurücksetzen von Wiederholungsüberwachungszyklen umfasst.

3. Alarmgerät nach Anspruch 1 oder 2, wobei die Steuerung Mittel zum Löschen von Nachrichten umfasst, die gespeichert sind, ohne eine voreingestellte Zeit lang wiederholt worden zu sein.

4. Alarmgerät nach einem der vorherigen Ansprüche, wobei die Steuerung Mittel zum Verschieben des Sendens einer wiederholten Nachricht umfasst, wenn ein anderes Gerät gerade sendet.

5. Alarmgerät nach Anspruch 4, wobei die Steuerung das Senden für eine Zeitperiode verschiebt, die gemäß einer Kennung des Gerätes und Kennungen der anderen Geräte gewählt wird.

6. Alarmgerät nach Anspruch 5, wobei die Steuerung um ein Mehrfaches einer Zeiteinheit verschiebt, wobei das Mehrfache je nach der Position einer Seriennummer seiner Kennung in der vollen Gruppe von Seriennummern aller Alarmgerätekennungen bestimmt wird.

7. Alarmgerät nach Anspruch 6, wobei die Steuerung Mittel zum Erlernen der genannten Seriennummern der anderen Geräte bei einer Hauscodierung bei der Installation umfasst.

8. Alarmgerät nach einem der vorherigen Ansprüche, wobei die Steuerung Mittel zum Ausführen einer Hauscodierung umfasst durch:
in einer ersten Phase, Senden und Neusenden ihrer Codierungsnachricht;
in einer zweiten Phase, Wiederholen von Hauscodes, die sie von anderen Geräten gelernt hat.

9. Alarmgerät nach Anspruch 8, wobei die Steuerung Mittel zum Senden aller gelernten Hauscodes in einer solchen Weise umfasst, dass das Broadcast von einem Host- oder Testsystem empfangen werden kann.

10. Alarmgerät nach Anspruch 8 oder 9, wobei die Steuerung Mittel zum Senden mit einer höheren Signalstärke bei der Hauscodierung als für andere Signaltypen umfasst.

11. Alarmgerät nach einem der vorherigen Ansprüche, wobei die Steuerung Mittel zum Broadcasten einer Anzeige der Signalstärke ihres Senders umfasst.

12. Alarmgerät nach einem der vorherigen Ansprüche, wobei die Steuerung Mittel umfasst, um als Repeater-Gerät mit aktivierter Repeater-Funktionalität konfiguriert zu werden.

13. Alarmgerät nach Anspruch 12, wobei die Steuerung Mittel umfasst, um sich als Reaktion auf ein von einem Host empfangenes Konfigurationsbefehlssignal selbst zu konfigurieren.

14. Alarmgerät nach einem der vorherigen Ansprüche, wobei der Sensor ein Rauch- oder Wärmesensor ist.

15. Alarmanlage, die mehrere Alarmgeräte nach einem der vorherigen Ansprüche umfasst.

## Revendications

1. Un dispositif d'alarme comprenant un détecteur de conditions ambiantes, un récepteur sans fil, un émetteur sans fil et un dispositif de commande,
où le dispositif de commande comprend un moyen d'insérer un indicateur de niveau de répétition dans un message répété, de lire des indicateurs de niveau de répétition dans des messages reçus, et de décider de répéter lesdits messages reçus selon les indicateurs de niveau de répétition,
où le dispositif de commande ne répète pas un message qui a déjà été répété un nombre de fois seuil maximal, comme indiqué par l'indicateur de niveau de répétition, et où le seuil maximal est trois.

2. Un dispositif d'alarme selon la Revendication 1, où le dispositif de commande comprend un moyen d'interrompre et de réinitialiser des cycles de surveillance de niveaux de répétition.

3. Un dispositif d'alarme selon la Revendication 1 ou 2, où le dispositif de commande comprend un moyen d'annuler des messages qui sont conservés sans être répétés pendant une période de temps prédéfinie.

4. Un dispositif d'alarme selon l'une quelconque des Revendications précédentes, où le dispositif de commande comprend un moyen de différer la transmission d'un message répété si un autre dispositif est en cours d'émission.

5. Un dispositif d'alarme selon la Revendication 4, où le dispositif de commande diffère la transmission pendant une période de temps choisie selon un identifiant du dispositif et des identifiants des autres dispositifs.

6. Un dispositif d'alarme selon la Revendication 5, où le dispositif de commande diffère d'un multiple d'une unité de temps, le multiple étant déterminé selon l'ordre d'un numéro de série de son identifiant dans le groupe complet des numéros de série de tous les identifiants des dispositifs d'alarme.

7. Un dispositif d'alarme selon la Revendication 6, où le dispositif de commande comprend un moyen d'apprendre lesdits numéros de série des autres dispositifs au cours d'une phase de codage de domicile lors de l'installation.

8. Un dispositif d'alarme selon l'une quelconque des Revendications précédentes, où le dispositif de commande comprend un moyen d'exécuter un codage de domicile en :
au cours d'une première phase, émettant et réémettant son message de codage,
au cours d'une deuxième phase, répétant les codes de domicile qu'il a appris à partir d'autres dispositifs.

9. Un dispositif d'alarme selon la Revendication 8, où le dispositif de commande comprend un moyen d'émettre tous les codes de domicile appris selon une manière par laquelle la radiodiffusion peut être reçue par un système hôte ou un système de test.

10. Un dispositif d'alarme selon la Revendication 8 ou 9, où le dispositif de commande comprend un moyen d'émettre à une puissance de signal plus élevée au cours du codage de domicile que pour d'autres types de signaux.

11. Un dispositif d'alarme selon l'une quelconque des Revendications précédentes, où le dispositif de commande comprend un moyen de radiodiffuser une indication de la puissance de signal de son émetteur.

12. Un dispositif d'alarme selon l'une quelconque des Revendications précédentes, où le dispositif de commande comprend un moyen d'être configuré en tant que dispositif répéteur avec la fonctionnalité de répéteur activée.

13. Un dispositif d'alarme selon la Revendication 12, où le dispositif de commande comprend un moyen de s'auto-configurer en réponse à un signal de commande de configuration reçu par un système hôte.

14. Un dispositif d'alarme selon l'une quelconque des Revendications précédentes, où le détecteur est un détecteur de fumée ou de chaleur.

15. Un système d'alarme comprenant une pluralité de dispositifs d'alarme selon l'une quelconque des Revendications précédentes.
